# EUROPEAN PATENT APPLICATION

(11) **EP 4 640 451 A1**
(43) Date of publication of application: **29.10.2025**
(21) Application number: 24171981.4
(22) Date of filing: 23.04.2024
(51) Int. Cl.: B60H 1/00, B60K 11/02, B60K 11/04

(54) **A HEAT EXCHANGE ARRAY**

(71) Applicant: VALEO SYSTEMES THERMIQUES, 78320 Le Mesnil Saint-Denis (FR)
(72) Inventor: BELZOWSKI, Michal, 32 050 Skawina (PL); STRAMECKI, Tomasz, 32 050 Skawina (PL); ZELEK, Grzegorz, 32 050 Skawina (PL)
(74) Representative: Valeo Powertrain Systems

(57) **Abstract**

The object of the invention is, inter alia, a heat exchange array (1000) for a motor vehicle comprising a first heat exchanger (100) comprising a first core (105) for a circulation of at least first fluid therein, the first core (105) comprising a plurality of first heat exchange elements (105a) stacked in a first stacking direction between a first primary end plate (105b) and a second primary end plate (105c), the end plates (105b, 105c) delimiting the core (105), and at least one second heat exchanger (200) for circulation of at least second fluid therein, the second heat exchanger (200) further comprising a second core (205) comprising a plurality of second heat exchange elements (205a) stacked in a second stacking direction between a first secondary end plate (205b) and a second secondary end plate (205c), the end plates (205b, 205c) delimiting the second core (205), wherein the second stacking direction is substantially parallel with respect to the first stacking direction, wherein the array (1000) further comprises a first board (800) extending between the first core (105) and the second core (205), wherein the first board (800) is arranged between the first primary end plate (105b) and at least one first heat exchange element (105a), and between the first secondary end plate (205b) and at least one second heat exchange element (205a) of the second core (205).

## Description

### FIELD OF THE INVENTION

The invention relates to a heat exchange array. In particular, the invention relates to a heat exchange array for a motor vehicle.

### BACKGROUND OF THE INVENTION

The OEMs trend to pursue more compact and cost effective air conditioning modules. This forces constructors (suppliers) to integrate the sub-components effectively. In the currently applied solutions the distribution manifold may be connected to heat exchangers directly via rubber hoses conducting coolant (or sometimes also refrigerant). Increased integration can be carried out by integrating few exchanger at one core or integration of heat exchangers between coolant and refrigerant manifold. This may lead to several disadvantages, namely high level of complicity of the sub-components, a need to use very precise and expensive tooling, and lots of potential issues during the assembly.

Moreover, when two or more heat exchangers arranged very close to each other are subject to different rates of thermal expansion and/or contraction as the heat exchangers may operate in different modes and in different fluids. This may lead even to failure of one of the heat exchangers and leakage of the fluid to the environment.

Some heat exchangers may be connected together at the bottom and at the top of the core via so-called common plate. Common plates are good for integration, however it still has drawbacks related to thermal expansion of components in operational mode of the heat exchangers.

As each of the heat exchanger usually comprises spigots or nozzles which allow connecting said heat exchangers to the loop. However, when using the common plate the expansion of at least one of the cores may be limited, leading to cracks therein and consequently, leakage. Further the common plates provide the heat exchange between the cores of the heat exchangers which may severely impact the performance.

Thus, there is a need to provide a heat exchanger which will compensate the thermal expansion of the core.

There is another need to provide a heat exchanger which would provide a thermal insulation between the cores of the heat exchangers.

### SUMMARY OF THE INVENTION

The object of the invention is, inter alia, a heat exchange array for a motor vehicle comprising a first heat exchanger comprising a first core for a circulation of at least first fluid therein, the first core comprising a plurality of first heat exchange elements stacked in a first stacking direction between a first primary end plate and a second primary end plate, the end plates delimiting the core, and at least one second heat exchanger for circulation of at least second fluid therein, the second heat exchanger further comprising a second core comprising a plurality of second heat exchange elements stacked in a second stacking direction between a first secondary end plate and a second secondary end plate, the end plates delimiting the second core, wherein the second stacking direction is substantially parallel with respect to the first stacking direction, wherein the array further comprises a first board extending between the first core and the second core, wherein the first board is arranged between the first primary end plate and at least one first heat exchange element, and between the first secondary end plate and at least one second heat exchange element of the second core.

Advantageously, the first heat exchanger further comprises a first communication plate fixed directly to the first primary end plate, the first communication plate being configured to provide an inlet and outlet for the first heat exchanger.

Advantageously, the second heat exchanger further comprises a second communication plate fixed directly to the first secondary end plate, the second communication plate being configured to provide an inlet and outlet for the second heat exchanger.

Advantageously, the first board is configured to provide a fluidal communication between the first communication plate and the first core, and between the second communication plate and the second core, respectively.

Advantageously, the first heat exchanger further comprises a first primary cooling zone arranged between the first primary end plate and the first board.

Advantageously, the second heat exchanger comprises first secondary cooling zone arranged between the first secondary end plate and at the first board.

Advantageously, the first heat exchanger further comprises a second primary cooling zone, the second primary cooling zone being in contact directly with the first board on one side, and at least with one heat exchange element on the other side thereof.

Advantageously, the second heat exchanger further comprises a second secondary cooling zone, the second secondary cooling zone being in contact directly with the first board on one side, and at least with one heat exchange element on the other side thereof.

Advantageously, at least one of the primary cooling zones forms a hollow portion extending in perpendicular to respective first stacking direction and/or second stacking direction.

Advantageously, at least one of the primary cooling zones forms a cooling conduit for the fluid, the cooling conduit extending in perpendicular to respective first stacking direction and/or second stacking direction.

Advantageously, at least one of the end plates is thicker that the first board, wherein the thickness is measured in parallel with respect to the first stacking direction.

Advantageously, the first board is substantially flat in its entirety, so that the first core and the second core are at the same level at least on one side.

Advantageously, the array further comprises a baseplate, the baseplate being fixed to the second primary end plate of the first heat exchanger and the second secondary end plate of the second heat exchanger, so that the end plates are sandwiched between respective heat exchange elements and the baseplate.

Advantageously, the first heat exchanger is water cooled condenser and the second heat exchanger is a chiller.

Advantageously, the first heat exchanger is water cooled condenser and the second heat exchanger is the sub-cooler for the first heat exchanger.

Advantageously, the baseplate is substantially flat in its entirety, so that the first core and the second core are at the same level at least on one side.

Advantageously, the baseplate comprises a first base potion, wherein the first base potion is in contact with the first heat exchanger, at least a second base portion, wherein the second base portion is in contact with the second heat exchanger, and a third base potion configured to connect the first base portion and the third base portion so that the and the third base portion are at different levels.

Advantageously, the array further comprises at least one third heat exchanger, the third heat exchanger comprising a third core comprising a plurality of third heat exchange elements stacked in a third stacking direction, the third stacking direction being substantially parallel with respect to the first stacking direction.

Advantageously, the baseplate further comprises a fourth base potion, wherein the fourth base potion is in contact with the third heat exchanger and a fifth base portion configured to connect the fourth base portion and the second base portion so that the fourth base portion and the first base portion are at the same level and wherein the second base portion is at the different level than the fourth base portion and the first base portion.

Advantageously, the baseplate further comprises a fourth base potion, wherein the fourth base potion is in contact with the third heat exchanger and a fifth base portion configured to connect the fourth base portion and the second base portion so that the fourth base portion and the first base portion are at different levels and wherein the second base portion is at the different level than the fourth base portion and the first base portion.

### BRIEF DESCRIPTION OF DRAWINGS

Examples of the invention will be apparent from and described in detail with reference to the accompanying drawings, in which:

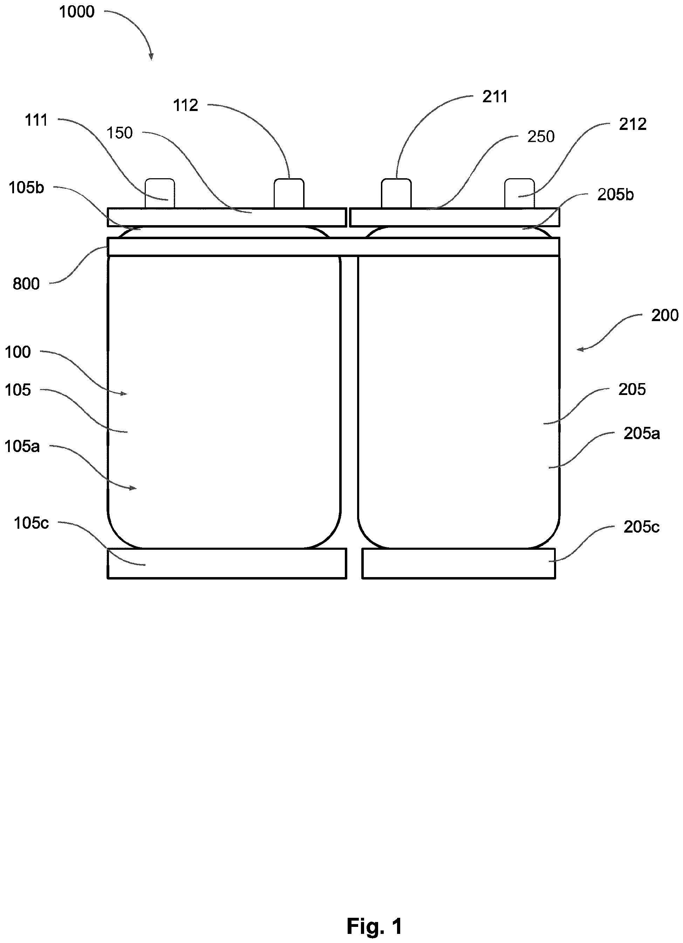

Fig. 1 shows a schematic view of the array comprising two heat exchangers connected by the first board.

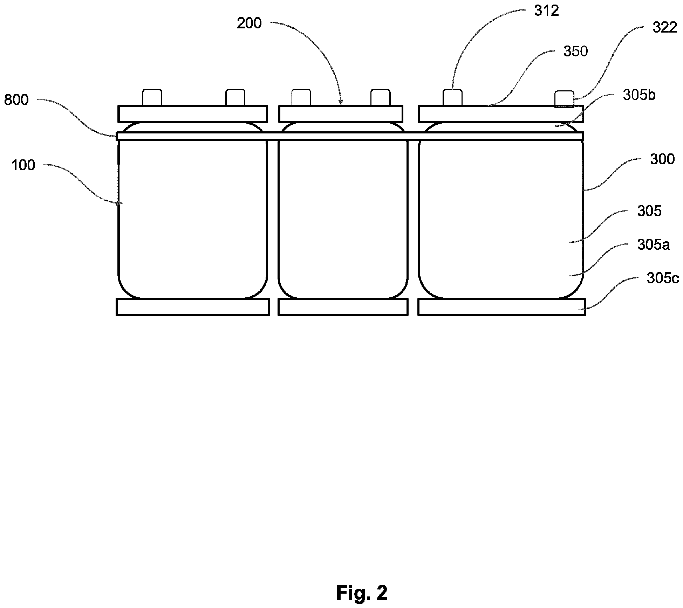

Fig. 2 shows a schematic view of the array comprising three heat exchangers connected by the main board.
Fig.3 shows the detailed view of the array shown in Fig.1.

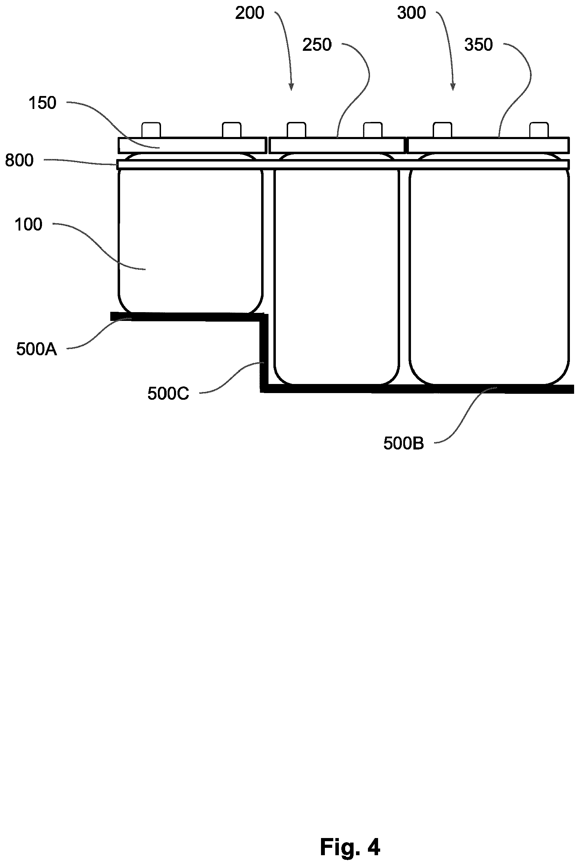

Fig. 4 shows a schematic view of the three heat exchangers, wherein one of the heat exchangers has smaller core than the other two.

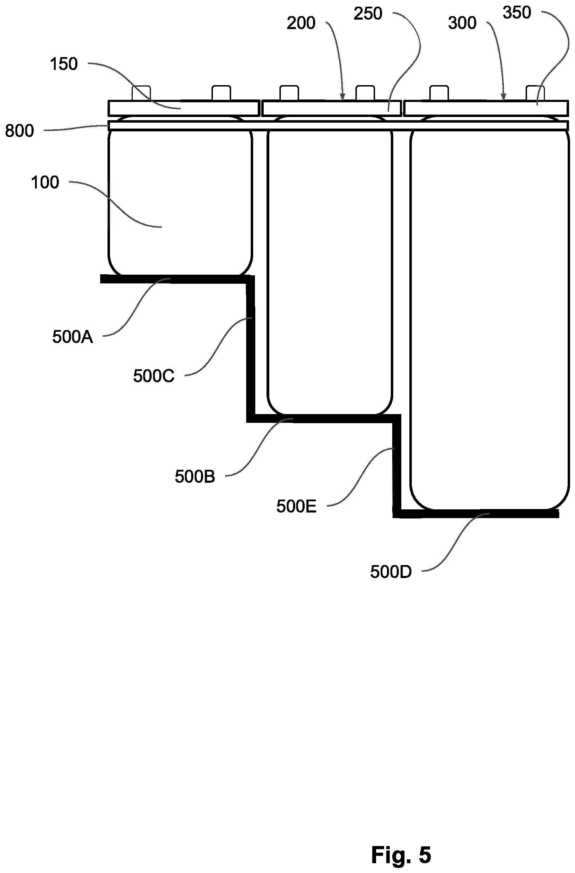

Fig. 5 shows a schematic view of the three heat exchangers in cascading arrangement, wherein all heat exchangers have different core size.

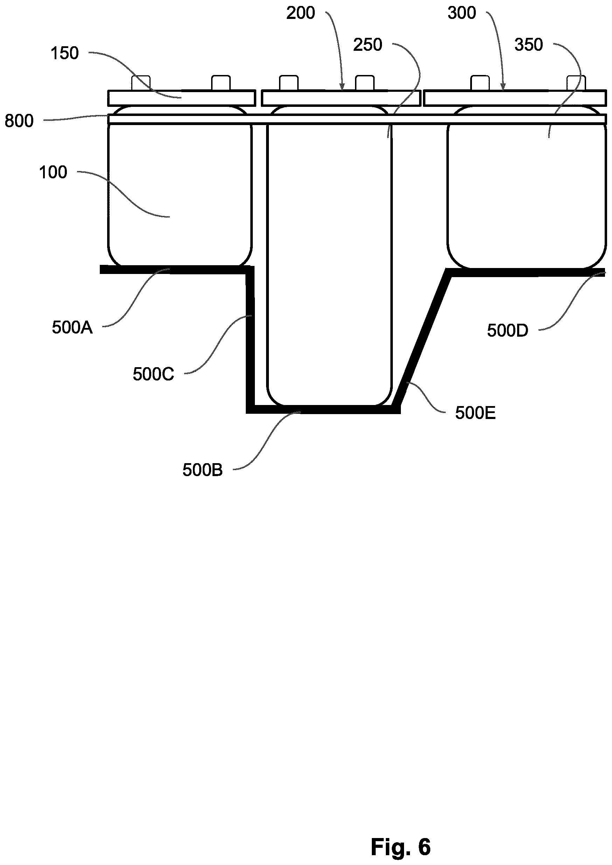

Fig. 6 shows a schematic view of the three heat exchangers, wherein the lateral heat exchangers have the same core size, and the middle one is bigger.

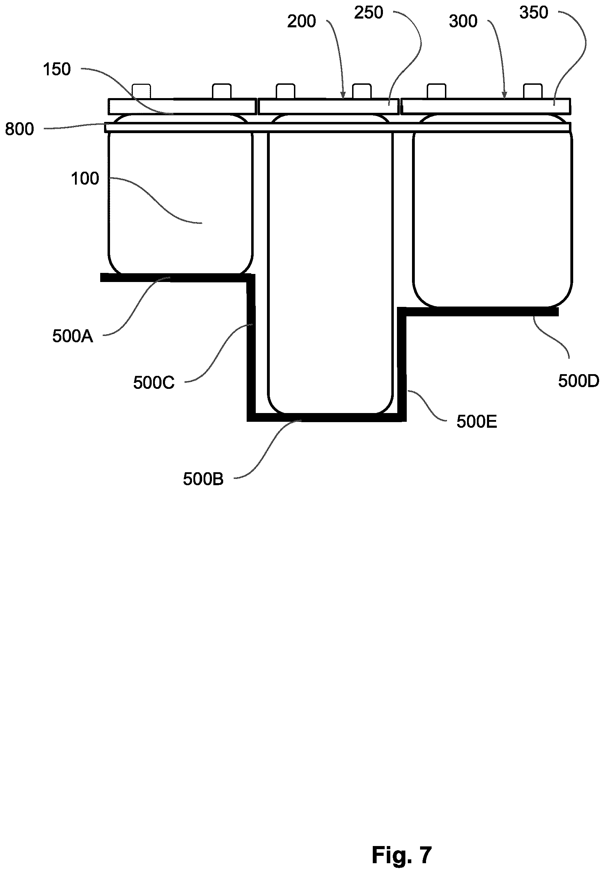

Fig.7 shows a schematic view of the three heat exchangers, wherein all heat exchangers have different cores and the greatest one is arranged between the other two.

### DETAILED DESCRIPTION OF EMBODIMENTS

The subject-matter of the invention is, among other, a heat exchange array 1000 for a motor vehicle. Term "array" may be regarded as the assembly of several components arranged in a particular manner whereas such components are per se suitable for operation independently.

The array 1000 may comprise a first heat exchanger 100 comprising a first core 105 for a circulation of at least first fluid therein. The first fluid may be, for example, a refrigerant, whereas the second fluid may be, for example, a coolant. The type of the first fluid and or/ second fluid may be selected depending on the application of the first heat exchanger 100. In order to provide the circulation of at least the first fluid in the heat exchanger 100, the first core 105 may comprise a plurality of first heat exchange elements 105a. The first heat exchange elements 105a may be, for example, a stamped plates. The first heat exchange elements 105a may be stacked in a first stacking direction so that each consecutive plate fixed to the core 100 provides a fluid-tight conduit for the fluid. In general, the stacking direction may be substantially perpendicular to a general plane of the first heat exchange elements 105a.

Similarly, the array 1000 may further comprise at least one second heat exchanger 200 for circulation of at least second fluid therein. The second fluid may be, for example, a coolant. The type of the second fluid may be selected depending on the application of the second heat exchanger 200. For instance, the first and the second fluid may be circulating in the second heat exchanger 200 simultaneously. In order to provide the circulation of at least the second fluid in the array 1000, the second heat exchanger 200 may further comprise a second core 205. The second core 205 may further comprise a plurality of second heat exchange elements 205a stacked in a second stacking direction. The second heat exchange elements 205a may be, for example, stamped plates arranged analogically to first heat exchange elements 105a, i.e. the second heat exchange elements 205a so that each consecutive plate fixed to the core 100 provides a fluid- tight conduit for the fluid. In general, the stacking direction may be substantially perpendicular to a general plane of the second heat exchange elements 205a. The second stacking direction may be substantially parallel with respect to the first stacking direction.

In one of the examples, the array 1000 may further comprise at least one third heat exchanger 300. The third heat exchanger 300 is not compulsory for carrying out the invention and it should be noted that term "at least one second heat exchanger 200" which has been already used describes precisely that the array 1000 may comprise further heat exchanger i.e. the third heat exchanger 300, not the "second second heat exchanger". Same refers to term "at least one third heat exchanger 300- it means that the array 1000 may further comprise a fourth, fifth heat exchanger, etc.

Similarly to the first and second heat exchangers 100, 200, the third heat exchanger 300 may comprise a third core 305 comprising a plurality of third heat exchange elements 305a stacked in a third stacking direction, the third stacking direction being substantially parallel with respect to the first stacking direction. The third heat exchanger 300 may be for circulation of at least third fluid therein. The first fluid and/or the second fluid may also circulate therein. The third fluid may be, for example, a refrigerant or a coolant. The type of the third fluid may be selected depending on the application of the third heat exchanger 300. In order to provide the circulation of at any of the first, second or third fluid in the third heat exchanger 300, it may further comprise a third core 305. The third core 305 may further comprise a plurality of third heat exchange elements 305a stacked in a third stacking direction. The third heat exchange elements 305a may be, for example, stamped plates arranged analogically to first heat exchange elements 105a, i.e. the third heat exchange elements 305a so that each consecutive plate fixed to the third core 305 provides a fluid- tight conduit for the fluid. In general, the stacking direction may be substantially perpendicular to a general plane of the third heat exchange elements 305a. The third stacking direction may be substantially parallel with respect to the first and/or second stacking direction.

In operation, i.e. when the array 1000 is connected to the loop and the fluids may circulate, the heat exchangers 100, 200 may undergo a thermal expansion or contraction. It must be noted that for the most part all relationships between the sub-components of the array 1000 are described in non-operational mode, i.e. the thermal expansion or contraction does not affect how the description should be perceived, unless stated otherwise. The non-operational mode may be regarded as the state of the array 1000, in which it is mounted on a vehicle, but the entire array 1000 has the same temperature as ambient temperature, or even as the standalone array 1000 in which there are no fluids.

The first heat exchanger 100 may comprise a first primary end plate 105b, and a second primary end plate 105c. The primary end plates 105b, 105c are for delimiting the first core 105. In other words, the primary end plates 105b, 105c are the terminal elements of the stack of the first heat exchange elements 105a.

Similarly, the second heat exchanger 200 may comprise a first secondary end plate 205b and a second secondary end plate 205c for delimiting the core second 205. In other words, the first secondary end plate 205b and the second secondary end plate 205c are the terminal elements of the stack of the second heat exchange elements 205a.

Similarly, the third heat exchanger 300 may comprise a first tertiary end plate 305b and a second tertiary end plate 305c for delimiting the third core 305. In other words, the first tertiary end plate 305b and a second tertiary end plate 305c are the terminal elements of the stack of the third heat exchange elements 305a.

The array 1000 may further comprise a first board 800 extending between the first core 105 and at least the second core 205. The first board 800 may form a structural link between the heat exchangers 100, 200, 300, so that the array 1000 is cohesive.

The first board 800 may arranged between the first primary end plate 105b and at least one first heat exchange element 105a. As the first primary end plate 105b may be thicker than the first heat exchange element 105a, the first board 800 is fixed to the robust part of the first heat exchanger 100. The thickness of the first primary end plate 105b and the first heat exchange element 105a may be measured in parallel to the first stacking direction. Similarly, the first board 800 may be arranged between the first secondary end plate 205b and at least one second heat exchange element 205a of the second core 205. As the first secondary end plate 205b may be thicker than the second heat exchange element 205a the first board 800 is fixed to the robust part of the second heat exchanger 200. The thickness of the first secondary end plate 205b and the second heat exchange element 205a may be measured in parallel to the second stacking direction. The analogical principles are valid for consecutive heat exchangers, such as the third heat exchanger 300, in case they are present in the array 1000.

Both the first heat exchanger 100 and the second heat exchanger 200 may comprise a first communication plate 150 and a second communication end plate 250, respectively. Also the third heat exchanger 300 may comprise a third communication plate 350. The third communication plate 350 is configured to receive at least one third inlet and at least one third outlet 322.

The first communication plate 150 may be fixed directly to the first primary end plate 105b. It should be noted that structurally communication plates 150, 250, 350 are located at the outermost part of the respective heat exchanger 100, 200, 300 and they serve mainly for communication with respective loop or other heat exchanger. For this reason, the first communication plate 150 may be configured to provide an inlet 111 and outlet 112 for the first heat exchanger 100. Similarly, the second communication plate 250 which is fixed directly to the first secondary end plate 205b, the second communication plate 250 may be configured to provide an inlet 211 and outlet 212 for the second heat exchanger 200. The analogical principles are valid for consecutive heat exchangers, such as the third heat exchanger 300, in case they are present in the array 1000.

At least one of the end plates 105b, 105c, 205b, 205c may thicker that the first board 800, wherein the thickness is measured in parallel with respect to the first stacking direction.

Consequently, the first board 800 may comprise means of fluidal communication. The first board 800 may be configured to provide a fluidal communication between the first communication plate 150 and the first core 105, and between the second communication plate 250 and the second core 205, respectively. The fluidal communication may be carried out by means of the first orifices 801 and the second orifices 802, wherein the first orifices 801 are associated with the first heat exchanger 100, and the second orifices 802 are associated with the second heat exchanger 200. It should be noted that the number of first orifices 801 and the second orifices 802 may be adapted according to the needs. The analogical principles are valid for consecutive heat exchangers such as the third heat exchanger 300, in case they are present in the array 1000.

In order to reduce the thermal expansion of the heat exchangers 100, 200, 300, they may comprise cooling zones. The cooling zones in fact provide the thermal insulation to the first board 800, so that it does not undergo the thermal expansion or contraction in such extent as the core. Thus, the first heat exchangers 100 may further comprise a first primary cooling zone 199A arranged between the first primary end plate 105b and the first board 800. Further, the first heat exchanger 100 may further comprise a second primary cooling zone 199B. The second primary cooling zone 199B may be in contact directly with the first board 800 on one side, and at least with one heat exchange element 150a on the other side thereof.

Analogically, the second heat exchanger 200 comprises first secondary cooling zone 299A arranged between the first secondary end plate 205b and at the first board 800. The second heat exchanger 200 may further comprise a second secondary cooling zone 299B, the second secondary cooling zone 299B being in contact directly with the first board 800 on one side, and at least with one heat exchange element 250a on the other side thereof.

Although both cooling zones 199A, 199B, 299A, 299B. have similar purpose, the main difference between them is the location with relation to the first board 800.

At least one of the primary cooling zones 199A, 199B may be a hollow portion 600 extending in perpendicular to respective first stacking direction and/or second stacking direction. Similarly, at least one of the secondary cooling zones 299A, 299B may be a hollow portion 600 extending in perpendicular to respective second stacking direction and/or first stacking direction.

The hollow portion 600 may be regarded as so-called "blind tube", i.e. the heat exchanger element 150a, 250a, which is devoid of the fluidal communication with any fluid circulating in the heat exchanger 100, 200, in particular the hot fluid. This allows providing the thermal insulation from the hot fluid, so the first board is not subjected to the thermal expansion/ contraction.

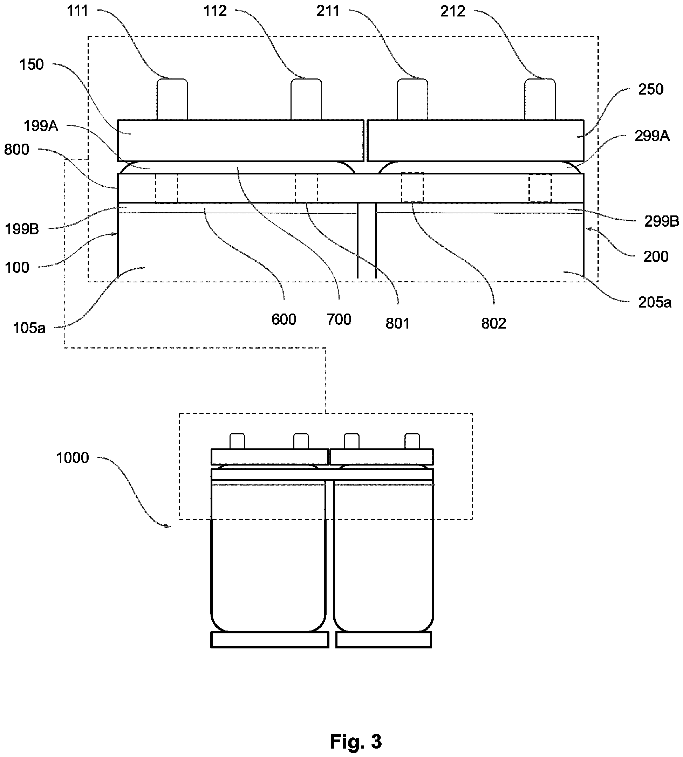

Alternatively, at least one of the primary cooling zones 199A, 199B may be a cooling conduit 700 for the fluid. Similarly, at least one of the secondary cooling zones 299A, 299B may be a cooling conduit 700 for the fluid. The name cooling conduit explicitly suggests that the fluid circulating therein should be the one of lowest temperature, compared to the other fluids circulating in the array 1000. The cooling conduit 700 may extend in perpendicular to respective first stacking direction and/or second stacking direction. In contrast to the hollow portion 600, the cooling conduit 700 remains is fluidal communication with the core 150, 250. Referring to Fig.3 an exemplary locations of the hollow portion 600 and the cooling conduit are shown on the first heat exchanger 100.

Thanks to the properties of the first board 800, the inlets 111, 211 and the outlets 112, 212 of the heat exchangers 100, 200 may remain in the predefined distance with respect to each other, so that the piping connecting these elements is not stressed in operation. The distance between the inlets 111, 211 and the outlets 112 may be measured in perpendicular with respect to the first stacking direction. The first board 800 may be substantially flat in its entirety, so that the first core 105 and the second core 205 are at the same level at least on one side. However, different shapes and sizes of the first board 800 are envisaged. For instance, the first board 800 may be a flat piece of metallic, I-shaped material, i.e. it comprises at least one cross-section which is in the shape of rectangle. Alternatively, the first board may be L-shaped, C-shaped, U-shaped or T-shaped. The shape of the first board 800 may reflect on the special distribution of the heat exchangers fixed thereto, or rather, the shaped of the first board may be adapted to the desired special distribution of the heat exchangers.

In order to further secure the heat exchangers 100, 200, 300, the respective cores 105, 205, 305 may be fixed to a baseplate 500. The baseplate 500 is not necessary for carrying out the invention, yet it brings many advantages. In particular, the baseplate 500 may be fixed to the second primary end plate 105c of the first heat exchanger 100 and the second secondary end plate 205c of the second heat exchanger 200, so that the end plates 105c, 205c are sandwiched between respective heat exchange elements 105, 205 and the baseplate 500.

The baseplate 500 in not only a structural support for the heat exchangers 100, 200, 300 but also allows arranging them next to each other in a desired manner. The baseplate 500 may be connected directly to the first core 105 and/or at least the second core 205 and/ or the third core 305.

In order to secure the heat exchanger 100, 200, 300, the array 1000 comprises the baseplate 500. In one of the embodiments, the baseplate 500 is substantially flat in its entirety, so that the first core 105 and the second core 205 are at the same level at least on one side, i.e. on the opposite of the core 105, 205, 305 with respect to the baseplate 500. In other words, the baseplate allows arranging the cores 105, 205, 305 in such a manner that the plates 150, 250, 350 are substantially parallel to each other.

The baseplate 500 may be a substantially planar element. Thus it may comprise only one portion, namely a first base portion 500A. Such a baseplate may receive two or more heat exchangers 100, 200, 300. In this embodiment, the cores 105, 205, 305 of consecutive heat exchangers 100, 200, 300 may be of the similar height, wherein the height of the core is measured between the baseplate 500 and the respective first, second or third plate 150, 250, 350, and in parallel with respect to the first, second, or third stacking directions, respectively. The scenarios described in further paragraphs disclose different baseplate 500 configurations, yet only the flat baseplate is present in the figures.

Alternatively, the cores 105, 205, 305 of consecutive heat exchangers 100, 200, 300 may be of different heights wherein the height of the core is measured between the baseplate 500 and the respective first, second or third plate 150, 250, 350, and in parallel with respect to the first, second, or third stacking directions, respectively. This however requires modifying the baseplate 500 as described in further paragraph.

Accordingly, the baseplate 500 may comprise a first base potion 500A, wherein the first base potion 500A is in contact with the first heat exchanger 100, at least a second base portion 500B (not shown), wherein the second base portion 500B is in contact with at least with the second heat exchanger 200, and a third base potion 500C (not shown) configured to connect the first base portion 500A and the second base portion 500B so that the 500A and the second base portion 500B are at different levels. In order to provide a compact array 1000, the third base portion 500C may be arranged perpendicularly with respect to the first base portion 500A and the second base portion 500B. In other words, there is a right angle between the third base portion 500C and the first base portion 500A and the second base portion 500B, whereas the first base portion 500A is parallel to the second portion 500B. This embodiment also includes that, for example, the first base portion 500A comprises the first heat exchanger 100, and the second base portion is connected to the second heat exchanger 200 and the third heat exchanger, so that they have substantially equal heights of their cores.

Alternatively, the third base portion 500C may be slanted with respect to the first base portion 500A and the second base portion 500B. this mat increase the packaging in the direction perpendicular to the first stacking direction, but may decrease the packaging in a direction parallel to the first stacking direction. This embodiment also includes that, for example, the first base portion 500A comprises the first heat exchanger 100, and the second base portion is connected to the second heat exchanger 200.

Accordingly, the baseplate 500 may further comprise a fourth base potion 500D(not shown), wherein the fourth base potion 500D is in contact with the third heat exchanger 300, and a fifth base portion 500E (not shown) configured to connect the fourth base portion 500D and the second base portion 500B so that the fourth base portion 500D and the first base portion 500A are at the same level. Consequently, the second base portion 500B is at the different level than the fourth base portion 500D and the first base portion 500A.

Accordingly, the baseplate 500 may comprise a fourth base potion 500D, wherein the fourth base potion 500D is in contact with the third heat exchanger 300, and a fifth base portion 500E configured to connect the fourth base portion 500D and the second base portion 500B. There are several ways in which one may arrange the heat exchangers 100, 200, 300 on the baseplate 500. In one of the examples the fifth base portion 500E configured to connect the fourth base portion 500D and the second base portion 500B may be so arranged, that the fourth base portion 500D and the first base portion 500A are at different level and wherein the second base portion 500B is at the different level than the fourth base portion 500D and the first base portion 500A. This includes a configuration which looks similar to the staircase, or the configuration which forms essentially a letter U or J, i.e. the first base portion 500A is at the first level, the second base portion 500B is lower than the first base portion, and the fourth base potion 500D is at the level between the first base potion 500A and the second base portion 500B. In the staircase configuration, the first base portion 500A may be at the first level, the second base portion 500B may be, for example, at the lower than the first level, and consequently the fourth base portion 500D may be at the lower level than the second base potion 500B and the first base portion 500A.

The invention also includes a motor vehicle comprising at least one array 1000 described above.

Other variations to the disclosed embodiments can be understood and effected by those skilled in the art in practicing the claimed invention, from a study of drawings, the disclosure, and the appended claims. The mere fact that certain measures are recited in mutually different dependent claims does not indicate that a combination of these measures cannot be used to the advantage.

## Claims

1. A heat exchange array (1000) for a motor vehicle comprising a first heat exchanger (100) comprising a first core (105) for a circulation of at least first fluid therein, the first core (105) comprising a plurality of first heat exchange elements (105a) stacked in a first stacking direction between a first primary end plate (105b) and a second primary end plate (105c), the end plates (105b, 105c) delimiting the core (105), and at least one second heat exchanger (200) for circulation of at least second fluid therein, the second heat exchanger (200) further comprising a second core (205) comprising a plurality of second heat exchange elements (205a) stacked in a second stacking direction between a first secondary end plate (205b) and a second secondary end plate (205c), the end plates (205b, 205c) delimiting the second core (205), wherein the second stacking direction is substantially parallel with respect to the first stacking direction, wherein the array (1000) further comprises a first board (800) extending between the first core (105) and the second core (205), wherein the first board (800) is arranged between the first primary end plate (105b) and at least one first heat exchange element (105a), and between the first secondary end plate (205b) and at least one second heat exchange element (205a) of the second core (205).

2. The array (1000) according to claim 1, wherein the first heat exchanger (100) further comprises a first communication plate (150) fixed directly to the first primary end plate (105b), the first communication plate (150) being configured to provide an inlet (111) and outlet (112) for the first heat exchanger (100).

3. The array (1000) according to any of the preceding clams, wherein the second heat exchanger (200) further comprises a second communication plate (250) fixed directly to the first secondary end plate (205b), the second communication plate (250) being configured to provide an inlet (211) and outlet (212) for the second heat exchanger (200).

4. The array (1000) according to any of the preceding clams, wherein the first board (800) is configured to provide a fluidal communication between the first communication plate (150) and the first core (105), and between the second communication plate (250) and the second core (205), respectively.

5. The array (1000) according to any of the preceding clams, wherein the first heat exchanger (100) further comprises a first primary cooling zone (199A) arranged between the first primary end plate (105b) and the first board (800).

6. The array (1000) according to any of the preceding clams, wherein the second heat exchanger (200) comprises first secondary cooling zone (299A) arranged between the first secondary end plate (205b) and at the first board (800).

7. The array (1000) according to any of the preceding clams, wherein the first heat exchanger (100) further comprises a second primary cooling zone (199B), the second primary cooling zone (199B) being in contact directly with the first board (800) on one side, and at least with one heat exchange element (150a) on the other side thereof.

8. The array (1000) according to any of the preceding clams, wherein the second heat exchanger (200) further comprises a second secondary cooling zone (299B), the second secondary cooling zone (299B) being in contact directly with the first board (800) on one side, and at least with one heat exchange element (250a) on the other side thereof.

9. The array (1000) according to any of claims 7 or 8, wherein at least one of the primary cooling zones (199A, 199B) forms a hollow portion (600) extending in perpendicular to respective first stacking direction and/or second stacking direction.

10. The array (1000) according to any of the preceding clams, wherein at least one of the primary cooling zones (199A, 199B) forms a cooling conduit (700) for the fluid, the cooling conduit (700) extending in perpendicular to respective first stacking direction and/or second stacking direction.

11. The array (1000) according to any of the preceding clams, wherein at least one of the end plates ( 105b, 105c, 205b, 205c) is thicker that the first board (800), wherein the thickness is measured in parallel with respect to the first stacking direction.

12. The array (1000) according to any of the preceding claims, wherein the first board (800) is substantially flat in its entirety, so that the first core (105) and the second core (205) are at the same level at least on one side.

13. The array (1000) according to any of the preceding clams further comprising a baseplate (500), the baseplate (500) being fixed to the second primary end plate (105c) of the first heat exchanger (100) and the second secondary end plate (205c) of the second heat exchanger (200), so that the end plates (105c, 205c) are sandwiched between respective heat exchange elements (105, 205) and the baseplate (500).

14. The array (1000) according to any of the preceding claims, wherein the first heat exchanger (100) is water cooled condenser and the second heat exchanger (200) is a chiller.

15. The array (1000) according to any of the preceding claims, wherein the first heat exchanger (100) is water cooled condenser and the second heat exchanger (200) is the sub-cooler for the first heat exchanger (100).
